# EUROPEAN PATENT APPLICATION

(11) **EP 4 663 695 A1**
(43) Date of publication of application: **17.12.2025**
(21) Application number: 24218223.6
(22) Date of filing: 07.12.2024
(51) Int. Cl.: C08K 3/105, C08L 97/02, A01G 18/00

(54) **MYCELIUM-BASED COMPOSITE MATERIAL AND METHOD OF PRODUCING THE SAME**

(30) Priority: 16.06.2024 PL 44884524
(71) Applicant: Siec Badawcza Lukasiewicz Lodzki Instytut Technologiczny, 90-570 Lodz (PL)
(72) Inventor: Miskiewicz, Katarzyna, 95-010 Stryków (PL); Lason-Rydel, Magdalena, 95-030 Starowa Góra (PL); Maslowska-Lipowicz, Iwona, 91-324 Lódz (PL); Lawinska, Katarzyna, 95-070 Rabien AB (PL)
(74) Representative: Witek, Rafal

(57) **Abstract**

A composite material consisting of higher fungal mycelium and substrate and the method of its manufacture are disclosed. The material meets the requirements of EN ISO 11925-2:2020 and is resistant to a single flame, has excellent thermal insulation properties and mechanical strength so that it can be used in construction.

## Description

The object of the invention is a composite material based on mycelium and waste substrate, and a method of producing the same.

There are many literature reports that describe how to produce composite materials based on natural materials, which are waste raw materials from the agro-food industry, for example: walnut shell, hazelnut shell, peanut shell, currant pomace, strawberry seeds. [Kurańska M., Zieleniewska M., Auguścik M., Radwańska J., Ryszkowska J. Szczepkowski L, Prociak A., Chemical Industry 2016, 95, 250-255, Zieleniewska M., Szczepkowski L, Krzyzowska M., Leszczyński M.K., Ryszkowska J., Polimery2016, no. 11-12, 807-814].

A number of methods for making biocomposites are also known. US Patent No. 7459492 describes an eggshell natural filter used to make biocomposites.

Polish patent application P.440241, on the other hand, presents a method of producing a biocomposite from biodegradable poly(lactic acid) and diatomaceous earth, characterized by the fact that it additionally contains beeswax.

However, the waste used in such biocomposites is not only difficult to obtain, but is characterized by a high price. Besides, forming a composite based on them, often requires numerous additives and a complicated process of processing such waste.

European patent EP3828260A1 describes a method for a composite material based on wood materials bound to mycelium, mainly for furniture and coatings.

U.S. Patent 2017/0049059 A1 describes a method of manufacturing a mycelium based composite material that incorporates various support materials in the form of meshes, rods, and other filler agents as an internal component of the composite, where the mushroom shreds act as a binding agent and structural component.

European patent EP 2702137, on the other hand, describes a method of producing dehydrated mycelium that can be re-hydrated and quickly re-molded into many different shapes, such as bricks, blocks, granules and similar elements, with adhesion of these elements achieved by reviving the fungal organism, which causes the elements to fuse.

There are numerous patents and scientific procedures on how to grow fungi, as well as how to prepare the culture substrate for food applications.

Several patents describe in detail ways to use fungi, or their vegetative structure in the form of mycelium, for purposes otherthan consumption.

U.S. Patent No. 5854056 discloses a method for producing "mushroom pulp," a raw material that can be used to make paper products and textiles.

WO-A-2006/121354 describes the composition and manufacturing methods involving a composition of fungus material, solid substrate and biopolymer (in this case zeolite granules or xanthan gum).

KR-B-100288010 describes a method for producing a compressed culture medium for *Pleurotus ostreatus* using swollen rice husks, in which swollen rice husks obtained by soaking rice husks in water under pressure, are mixed with a nutrient source such as dried bean waste, rice bran or the like, while being heated and compressed.

The aim of the invention is to obtain a completely biodegradable material with excellent thermal insulation properties, which could be a substitute for i.e. styrofoam, which is problematic to dispose of. At the same time, it is desirable that such a material should have improved mechanical properties and thus be suitable for the manufacture of building materials with structural functions. It is also desirable that the new material be fireproof.

At the same time, it is desirable that the new material can be made from relatively readily available biodegradable waste materials.

The object of the invention is a composite material and a method of manufacturing it as defined in the accompanying claims.

The mycelium advantageously used according to the invention can be in the form of liquid culture or granular mycelium or mycelium sheets.

The material proposed according to the invention has a number of advantages. It is a biodegradable building material with excellent thermal and structural insulation properties and the required fire resistance. At the same time, it can be produced in readily available materials that are in most cases waste materials. In addition, the fungus used in the present invention can grow on a wide range of waste from the agro-food industry, mainly on waste containing cellulose in its composition., e.g., sawdust from deciduous trees, straw, used waste paper, or textile waste properly prepared and hydrated. As a result, the manufacture of the composite according to the invention may also involve the management of this type of waste.

### Example 1

A composite material consisting of higher fungal mycelium and waste substrate was made from the following ingredients:
1. Beech wood pellets - 94% of the substrate,
2. Gypsum in the amount of 5% in relation to the wet weight of the wood substrate,
3. Beet molasses - no more than 1% by wet weight of the substrate,
4. Demineralized water in sufficient quantity to hydrate the substrate to a moisture content of 60-85%RH.
5. Inoculum in the form of mycelium of higher fungi such as *P.ostreatus* or *Ganoderma lucidum,* among others, added to sterilized and cooled substrate in the amount of not less than 15% wet weight of sterile substrate.
6. Apple pectin (20% aqueous solution) added after the mycelium growth as a coating agent at a rate of 1-5% by weight of the produced biocomposite.
7. FCF brilliant blue dye.

The substrate components are mixed in a rotary mixer until combined. Water is added at the end when all substrate components are mixed. Excess water is removed by pressing in a filter nucca. The substrate is then transferred into a bag with a microfilter and a wax injection port. The bag with the substrate is sealed and then sterilized in an autoclave at 121⁰C, for 60 min. After removal from the autoclave, the substrate is cooled at room temperature and then mixed in a rotary mixer with the granular mycelium. The granular mycelium, is added to the substrate at a rate of 20% by wet weight of the substrate. After that the material is transferred into plastic or stainless steel molds, kneaded by hand so that the substrate fills the entire mold with no empty spaces. The molds are then wrapped three times with 10-micron perforated LDPE film and incubated at a temperature of not less than 22°C, with a humidity in the room not less than 60%RH. It is acceptable to cover the molds with foil provided with a microfilter for air exchange, or alternatively, it is also acceptable to use perforated plastic mold lids. After no less than 10 days of incubation, they are removed from the molds and incubated for another 10 days at about 24°C to achieve uniform overgrowth of the substrate by the mycelium.

After the culture stage, the produced material with a shape corresponding to the mold used is covered with an outer coating by soaking in a bath containing an aqueous solution of the natural substance apple pectin at a concentration of 20% and a natural dye at a concentration of 1%. The product is left to drain the excess solution. The product, which has taken the proper form, is clamped by metal anchors in such a way that it can be dried freely over the surface of the vat. The material is then dried in a convection oven at a temperature of not less than 70°C for not less than 24 hours. The material thus prepared meets the requirements of the standard according to PN-EN ISO 11925-2:2020 and is resistant to a single flame.

### Example 2

A composite material consisting of higher fungal mycelium and waste substrate was made from the following ingredients:
1. Beech wood pellets - 83% of the substrate,
2. Gypsum in the amount of 5% in relation to the wet weight of the wood substrate,
3. Oat bran -10% of the substrate,
4. Apple pectin added when mixing wood substrate with granular mycelium, at a rate of 2% by weight of hydrated substrate.
5. Inoculum in the form of mycelium of the higher fungus *Pleurotus ostreatus,* added to the sterilized and cooled substrate in an amount of 20% of the wet weight of the sterile substrate.
6. Demineralized water in sufficient quantity to hydrate the substrate to a moisture content of 60-85%RH.

All substrate components are mixed in a rotary mixer until combined. They are then transferred into a bag with a microfilter and a wax injection port. The substrate bag is sealed and then sterilized in an autoclave at 121°C, for 60 min. After removal from the autoclave, the substrate is cooled at room temperature and then mixed in a rotary mixer with granular mycelium. Granular mycelium, is added to the substrate in an amount of not less than 15% in relation to the wet weight of the substrate. The use of spore suspension or mycelial patches grown on culture media is acceptable at this stage. It is also permissible to inoculate the wood substrate, with mycelium grown on the wood substrate, which ensures continuity of production. The material is then transferred into plastic or stainless steel molds, kneaded by hand, so that the substrate fills the entire mold with no empty spaces. The molds are then wrapped three times with 10-micron perforated LDPE film and incubated at a temperature of not less than 22°C, with room humidity of not less than 60%RH. It is acceptable to cover the molds with a film provided with a microfilter for air exchange, alternatively, it is also acceptable to use perforated plastic mold covers. After at least 10 days of incubation, the material is removed from the molds and incubated for another 10 days at about 24°C, in order for the substrate to be evenly overgrown by the mycelium. In Example 2, a natural polymer (pectin) is added directly to the stirrer in the initial stage of culture, in an amount of 2% by weight of the substrate. The material is removed from the molds by turning the mold and gently pressing the mold, and then dried in a convection oven at a temperature of not less than 70°C for not less than 24 hours. The material prepared in this way meets the requirements of the standard according to PN-EN ISO 11925-2:2020 and is resistant to a single flame, possibly a small glowing point appears on the surface of the sample.

### Example 3

A composite material consisting of higher fungal mycelium and waste substrate was made from the following ingredients:
1. Beech wood pellets - 82% of the substrate.
2. Gypsum in the amount of 5% in relation to the wet weight of the wood substrate.
3. Plant fibers, in the form of, for example, corn straw, rye straw, oat straw, shredded with a chopper into 2-5cm pieces, hydrated to a moisture content of about 70%RH - in the amount of 13% of the substrate.
4. Inoculum in the form of mycelium of higher fungi, including *Pleurotus ostreatus* and *Ganoderma lucidum,* added to sterilized and cooled substrate at a rate of 22% of the wet weight of the sterile substrate.
5. Demineralized water in sufficient quantity to hydrate the substrate to a moisture content of 60-85%RH.

In Example 3, all substrate components are mixed in a rotary mixer until combined. They are then transferred into a bag with a microfilter and a wax injection port. The substrate bag is sealed and then sterilized in an autoclave at 121°C, for 60 min. After removal from the autoclave, the substrate is cooled at room temperature and then mixed in a rotary mixer with the granular mycelium. Granular mycelium, is added to the substrate in an amount of no less than 15% in relation to the wet weight of the substrate. The use of liquid culture or patches of mycelium grown on culture media is acceptable atthis stage. It is also permissible to inoculate the wood substrate, with mycelium grown on the wood substrate, which ensures continuity of production. The plant fibers are chopped with a chopper into fragments of 2-5 cm in length. The fibers are then placed in a vat and flooded with hot tap water so that all the fibers are soaked in it. The fibers soak in the water for 24 hours to achieve a moisture content of about 70%RH. If after 24h, this moisture content cannot be achieved, the fibers are flooded with hot water and drained immediately. After the soaking, the plant fibers are transferred into a filter nucca, where they are pressed out of excess water. Then the material is transferred into plastic or stainless steel molds, kneaded by hand, so that the substrate fills the entire mold without free spaces.

During transfer into molds, natural plant fibers are added to the substrate so that they are layered mycelium-fiber-mycelium. The mycelium on the wood substrate is laid alternately with the plant fibers until the entire mold is filled. The molds are then wrapped three times with 10-micron perforated LDPE film and incubated at a temperature of not less than 22°C, with room humidity of not less than 60%RH conditions. After no less than 10 days of incubation, they are removed from the molds and incubated another 10 days at about 24°C, in order for the substrate to be evenly overgrown by the mycelium.

The material is removed from the molds by turning the mold and gently pressing the mold, and then dried in a convection oven at a temperature of not less than 70°C for not less than 24 hours.

### Example 4

A composite material consisting of higher fungal mycelium and waste substrate was made from the following ingredients:
1. Beech wood pellets - 82 % substrate.
2. Gypsum in the amount of not less than 5% in relation the wet weight of the wood substrate.
3. Patches of waste cellulosic material, hydrated to a moisture content of not less than 70%RH - 13% substrate.
4. Inoculum in the form of mycelium of higher fungi, including *Pleurotus ostreatus, Ganoderma lucidum* added to sterilized and cooled substrate in the amount of 25% of the wet weight of the sterile substrate.
5. Demineralized water in sufficient quantity to hydrate the substrate to a moisture content of 60-85%RH.

All substrate components are mixed in a rotary mixer until combined. They are then transferred into a bag with a microfilter and a wax injection port. The substrate bag is sealed and then sterilized in an autoclave at 121°C, for 60 min. After removal from the autoclave, the substrate is cooled at room temperature and then mixed in a rotary mixer with granular mycelium. The granular mycelium is added to the substrate in an amount of no less than 15% relative to the wet weight of the substrate. The use of liquid culture or patches of mycelium grown on culture media is acceptable at this stage. It is also permissible to inoculate the wood substrate, with mycelium grown on the wood substrate, which ensures continuity of production. Patches of cellulosic material of the size of the preset form are soaked in a hot bath and immediately removed, transferred into a sieve to get rid of excess water. Then the material is transferred into plastic or stainless steel molds, kneaded by hand, so that the substrate fills the entire mold without free spaces. During the layering into the molds, natural sheets of waste cellulose material are added: cardboard, in such a way that they are layered mycelium - fiber - mycelium. The mycelium on the wood substrate is laid alternately with the flaps, until the entire mold is filled. The molds are then wrapped three times with 10-micron perforated LDPE film and incubated at a temperature of not less than 22°C, with room humidity of not less than 60%RH. It is acceptable to cover the molds with a film provided with a microfilter for air exchange, alternatively, it is also acceptable to use perforated plastic mold covers. After at least 10 days of incubation, they are removed from the molds and incubated another 10 days at about 24°C, in order for the substrate to be evenly overgrown by the mycelium.

The material is removed from the molds by turning the mold and gently pressing the mold and then dried in a convection oven at a temperature of not less than 70°C for not less than 24 hours. In all the above examples of implementation, it is advantageous to add functional substances, depending on their type at different stages of fungus culture. It is advantageous to add substances with antimicrobial activity (among others: chitin, ionic liquid advantageously described in document P. P.440793: "New polymeric ionic liquids, the method of their production and application") at the stage of preliminary mixing in a rotary mixer, or during mixing of sterilized substrate with mycelium, in an amount not exceeding 1% by weight of wet substrate. It is advantageous to add substances, antimicrobial directly to the mass of the coating substance, in an amount not exceeding 5%. It is permissible to add natural dyes directly to the mass of the coating substance.

It is advantageous to add substances, antimicrobial, antiflammable, or preventing rodent or insect attack at the final stage of culture, after the formation stage, when during mycelial growth the total weight loss of the substrate is not less than 15%. Samples are coated with an antiflammable substance by soaking in an aqueous solution of this substance and then left to drain the excess of this substance on a sieve. The material thus prepared meets the requirements of the standard according to PN-EN ISO 11925-2:2020 and is resistant to a single flame.

It is permissible to add such a substance, directly to the coating substance, in an amount not exceeding 2% by volume, or to immerse directly in an aqueous solution of the functional additive. The procedure for other additives that impart resistance to various biotic and abiotic stresses to the test material, is exactly the same. The material is then dried at a temperature, not less than 70°C in a convection oven.

### Example 5

### Fire resistance of the obtained composite materials.

Measurements of the fire resistance of the materials obtained in examples 1-4 were carried out. For this purpose, a single flame test was carried out in accordance with PN-EN ISO 11925-2:2020. The tests were carried out in a chamber with forced ventilation. The specimen in the vertical position was subjected to the flame of a standardized arson source with a height of 20 mm.

The flame exposure times were: 15 s, 30 s or 60 s. After the expiration of the interaction time, the burner was moved away.

Two methods were used to affect the arson source on the sample:
- flaming the surface of the sample for all products within the scope of the standard,
- arson edge samples for products, which during surface ignition did not ignite.

During the study, it was determined:
- occurrence of ignition,
- sample burn time,
- flame range,
- the attainment by the flame tip of a distance of 150 mm above the point of flame application and the time after which this occurred.

All materials according to the invention have been found to be single flame resistant (Tests for reaction to fire - ignitability of materials subjected to direct flame - part 2: single flame test, PN-EN ISO 11925- 2:2020).

### Example 6

### Compressive strength of the obtained composite materials.

Measurements of the compressive strength of the materials obtained in examples 1-4 were performed.

For this purpose, a compressive strength test was carried out on a testing machine, where the material sample was placed between two pressure plates that pressed evenly on the entire surface of the material.

The results obtained are shown in the table below.

| Material obtained according to the example | Compressive strength - not less than [kPa] |
|---|---|
| 1 | 780 |
| 2 | 745 |
| 3 | 275 |
| 4 | 300 |

As a result of the tests carried out, it was found that the addition of a substance, advantageously pectin, significantly increases the compressive strength of the materials according to the invention. For pectin-coated materials, the measured compressive strength was no less than 730 kPa, while for materials without pectin it was no less than 275 kPa. In comparison, the analogously measured compressive strength of polystyrene foam was only min. 70 kPa.

### Example 7

### Thermal insulation properties of the obtained composite materials.

Measurements were made of the thermal insulation properties of the materials obtained in examples 1-4. For this purpose, the λ coefficient was measured. The lambda coefficient was measured using a suitable plate apparatus with heat flux density sensors.

The results obtained are shown in the table below.

| Material obtained according to the example | Value of λ [W/mK] coefficient |
|---|---|
| 1 | 0,037 |
| 2 | 0,038 |
| 3 | 0,037 |
| 4 | 0,039 |

For comparison, measured similarly, the lambda coefficient value is 0.030 to 0.045 W/(mK) for polystyrene foam, mineral wool 0.033-0.045 W/(mK), expanded cork board 0.045 W/(mK), asphalted cork board 0.070 W/(mK), straw board - 0,080 W/(mK), reed board 0.070 W/(mK), chip-cement board 0.15 W/(mK), white foam glass - 0.12 W/(mK), black foam glass - 0.07 W/(mK), lattice brick masonry 0.56 W/(mK), while solid brick masonry 0.77 W/(mK).

## Claims

1. A composite material, **characterized in that** it contains higher fungal mycelium, waste substrate and water, with the waste substrate containing beech pellets in an amount of 82-94% of the total weight of the substrate, gypsum in an amount of not less than 5% of the wet weight of the wood substrate, plant waste in an amount of not more than 13% of the weight of the substrate while the content of mycelium is not less than 15% of the wet weight of the substrate, and the water content corresponds to the moisture content of the waste substrate of 60%RH to 85%RH.

2. Composite material according to claim 1, **characterized in that** the mycelium is the mycelium of higher fungi of the *Basidiomycetes* and/or *Ganodermataceae* family, advantageously such as *Pleurotus ostreatus* or *Ganoderma lucidum.*

3. Composite material according to claim 1 **characterized by** the fact that the mycelium of higher fungi is in the form of liquid culture or mycelium sheets.

4. Composite material according to claim 1, **characterized by** the fact that it additionally contains a natural substance in an amount not exceeding 2% by weight of the hydrated substrate.

5. Composite material according to claim 4, **characterized in that** the substance is in the form of an outer coating.

6. Composite material according to claim 4, **characterized in that** the hydrophobic substance is fruit pectin, preferably apple pectin.

7. Composite material according to claim 4, **characterized in that** the natural substance is apple pectin in the form of an aqueous solution with a concentration of at least 15%.

8. Composite material according to claim 1, **characterized in that** it additionally contains a bioactive substance, advantageously an ionic liquid.

9. Composite material according to claim 1, **characterized in that** it additionally contains a coloring substance, whereby advantageously the coloring substance is a component of the outer coating or is contained in the entire mass of the material.

10. Method of manufacturing the composite material specified in claims 1-9, **characterized in that** it includes the following steps:
a) preparation of substrate for culture,
b) substrate sterilization,
c) mixing the substrate with granular mycelium,
d) mycelium culture,
e) transferring the material obtained in step (d) into molds,
f) incubation and
g) drying,
whereby in stage (d) mycelial culture is carried out at a temperature of not less than 22°C, with room humidity of not less than 60%RH, while in stage (g) drying is carried out in an oven, at a temperature of not less than 70°C.

11. Method according to claim 10, **characterized in that** in step (c) functional substances, advantageously hydrophobic, flame retardant, insecticidal or biocidal substances are additionally added to the mixture of mycelium and substrate, especially by immersion.

12. Method according to claim 10, **characterized in that** in step (e) the mycelium grown on the wood substrate is laid alternately with sheets of cellulose material so that the substrate fills the entire mold.

13. Method according to claim 10, **characterized in that** in step (c) the mycelium is added to the sterile substrate and mixed in a rotary mixer for not less than 5 minutes.

14. Method according to claim 10, **characterized in that** in step (b) the waste substrate is sterilized at 121°C for not less than 60 minutes.

15. Composite material according to claim 11, **characterized in that** an outer coating containing natural substances is applied after the molding step (f), and it is applied before the drying step (g).
